(19) Europäisches Patentamt

European Patent Office

Office européen des brevets

(11) Numéro de publication : **0 190 063 B1**

(12) **FASCICULE DE BREVET EUROPEEN**

(45) Date de publication du fascicule du brevet :
08.05.91 Bulletin 91/19

(21) Numéro de dépôt : **86400044.3**

(22) Date de dépôt : **09.01.86**

(51) Int. Cl.⁵ : **F16L 27/02**, F16L 27/08

(54) **Joint tournant permettant la dépose des moyens d'étanchéité et de roulement.**

(30) Priorité : **17.01.85 FR 8500659**

(43) Date de publication de la demande :
**06.08.86 Bulletin 86/32**

(45) Mention de la délivrance du brevet :
**08.05.91 Bulletin 91/19**

(84) Etats contractants désignés :
**DE FR GB IT NL**

(56) Documents cités :
FR-A- 2 072 405
US-A- 2 746 773
US-A- 3 114 392
PRODUCT ENGINEERING, vol. 47, no. 8, août
1976, page 14, New York, US; "Universal ball
bearing joint is small and versatile"

(73) Titulaire : **FMC EUROPE S.A. Société anonyme
dite:**
**Route des Clérimois B.P.91**
**F-89103 Sens (FR)**

(72) Inventeur : **Fusy, Joel**
**2 rue St-Martin, Barrault**
**F-89260 Thorigny-sur-Oreuse (FR)**

(74) Mandataire : **Rinuy, Santarelli**
**14, avenue de la Grande Armée**
**F-75017 Paris (FR)**

Jouve, 18, rue Saint-Denis, 75001 PARIS

## Description

La présente invention se rapporte à une disposition de dépose des moyens d'étanchéité et de roulement des joints tournants des ensembles de transfert de fluide.

Elle s'applique sur tous les bras de chargement et déchargement et sur toutes les installations utilisant des joints tournants avec passage d'un produit solide, liquide ou gazeux.

L'invention s'applique avantageusement aux bras articulés de transfert (chargement ou déchargement d'un navire par exemple) de produits fluides, du type général comportant une embase (E) et une ligne de produit comportant un tube interne (3) et un tube externe (1) articulés entre eux, le tube interne pivotant sur l'embase et le tube externe portant un ensemble à coudes par exemple.

On connaît dans le domaine les expressions "style 40" et "style 50" qui définissent l'une, un raccord tournant dont les deux extrémités sont, chacune, soudées sur un coude, et l'autre, la réunion d'un premier raccord tournant, puis d'un coude, puis d'un deuxième raccord tournant faisant un angle de 90° avec ledit premier raccord, puis d'un coude.

Un style 40 est prévu entre le tube interne et le tube externe et un autre style 50 est prévu entre le tube interne et l'embase.

Un coude (2) relie la rotation du style 40 et le tube externe.

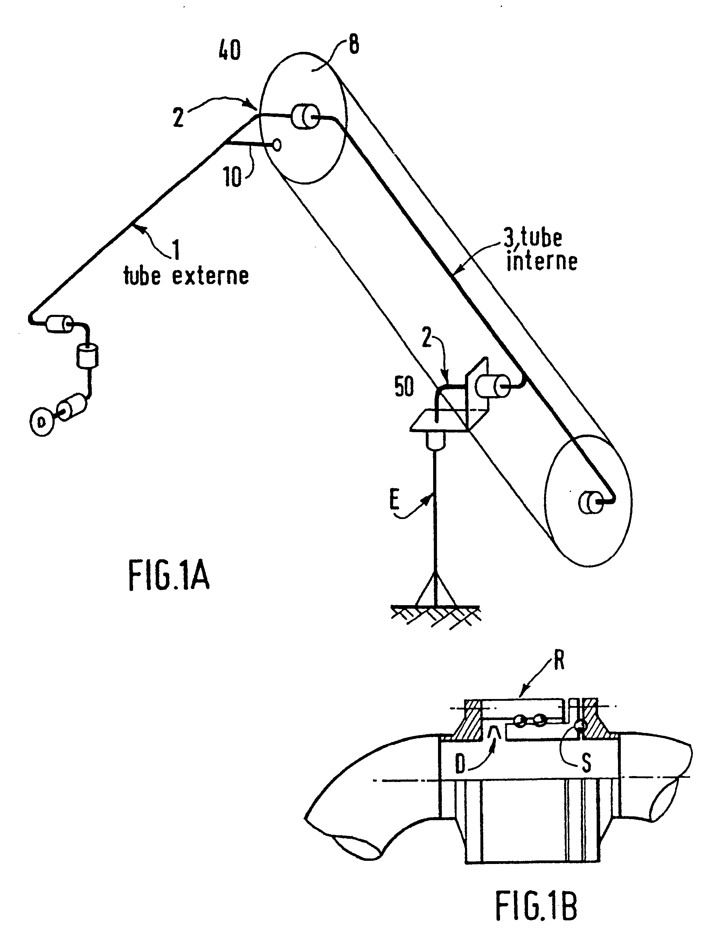

Un autre coude (2) relie les deux rotations du style 50 (voir la figure 1A des dessins annexés).

Un tel style 50 est notamment décrit dans le document FR-A-2.072.405, dont il faut préciser toutefois que le démontage du coude qui y est présenté permet le remplacement seulement des garnitures d'étanchéité, contrairement à l'invention qui vise en outre la dépose des moyens de roulement.

Un montage classique d'une rotation, prévue pour être déposée, (voir la figure 1B des dessins annexés) montre les inconvénients suivants :

– un encombrement important dû à l'utilisation de deux brides ;

– la présence d'une étanchéité statique (S) supplémentaire compte tenu de l'étanchéité dynamique (D) ce qui apporte un risque supplémentaire de fuite, lesdites étanchéités prenant appui entre lesdites brides et l'embout mâle de la rotation (R) d'où interdépendance de la fonction roulement et de la fonction étanchéité ; et

– le recours, pour supporter les efforts importants, à l'une des deux solutions qui consistent à prévoir, soit une pièce lourde, soit une augmentation du diamètre de passage.

La présente invention remédie à ces inconvénients et vise une disposition de dépose des moyens d'étanchéité et de roulement des joints tournants, dans laquelle la fonction étanchéité est dissociée de la fonction roulement, ce qui apporte, de surcroît, les avantages suivants :

– permettre le démontage de la rotation complète ;

– minimiser l'encombrement ; et

– offrir la possibilité de conserver un diamètre constant du tube-produit bien qu'utilisant un plus grand diamètre nominal de rotation pour la reprise des efforts mécaniques.

L'invention propose ainsi une tubulure articulée telle que définie à la revendication 1.

D'autres caractéristiques et avantages de la présente invention ressortiront de la description qui va suivre faite en regard des dessins annexés sur lesquels :

– la figure 1A est un schéma de bras articulé de chargement à styles 40 et 50, de type connu ;

– la figure 1B représente, en coupe partielle, un montage classique de rotation ;

– la figure 2 représente, en coupe partielle, un style 40 de bras articulé équipé suivant l'invention ;

– la figure 3 est une vue semblable de ce même joint en position de changement de garniture ;

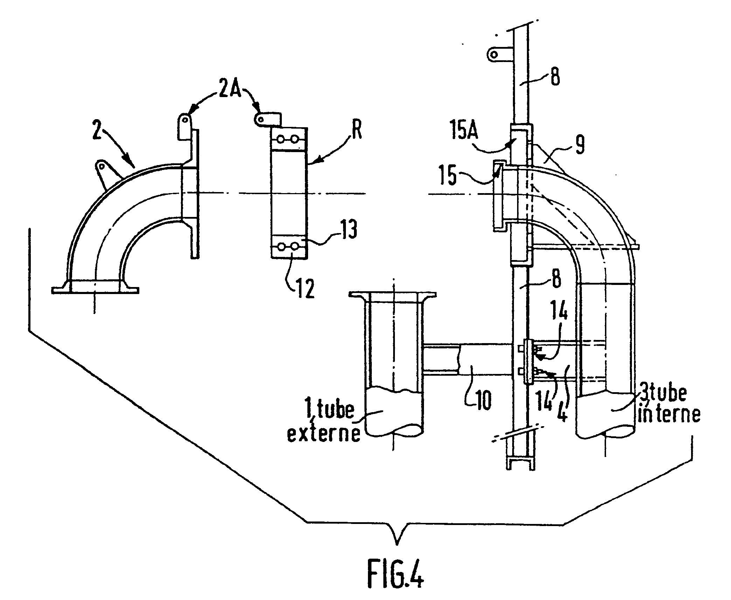

– la figure 4 est une vue en coupe partielle et éclatée de ce même joint en position de démontage de rotation ;

– la figure 5 représente, en coupe partielle, un style 50 de bras articulé équipé suivant l'invention ;

– la figure 6 est une vue semblable de ce même joint en position de changement de garniture ;

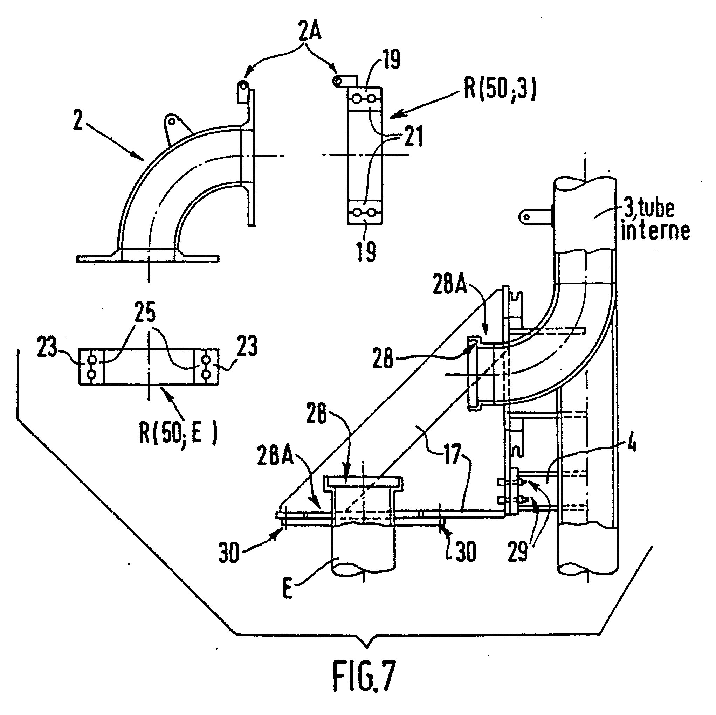

– la figure 7 est une vue en coupe partielle et éclatée de ce même joint en position de démontage de rotation.

Dans les deux formes de réalisation représentées se rapportant respectivement à un style 40 et un style 50 de bras articulé de chargement ou de déchargement équipé conformément à l'invention on assiste à une dissociation de la fonction étanchéité par rapport à la fonction roulement.

La disposition dissociative prévoit un moyen d'étanchéité (garniture G) en extrémité de la portion considérée de tube-produit (portion tube interne (3) pour le style 40 ; portion tube interne (3) et embase pour le style 50 et un moyen de roulement (rotation R) extérieur, concentrique à ce moyen d'étanchéité et indépendant de ce moyen d'étanchéité.

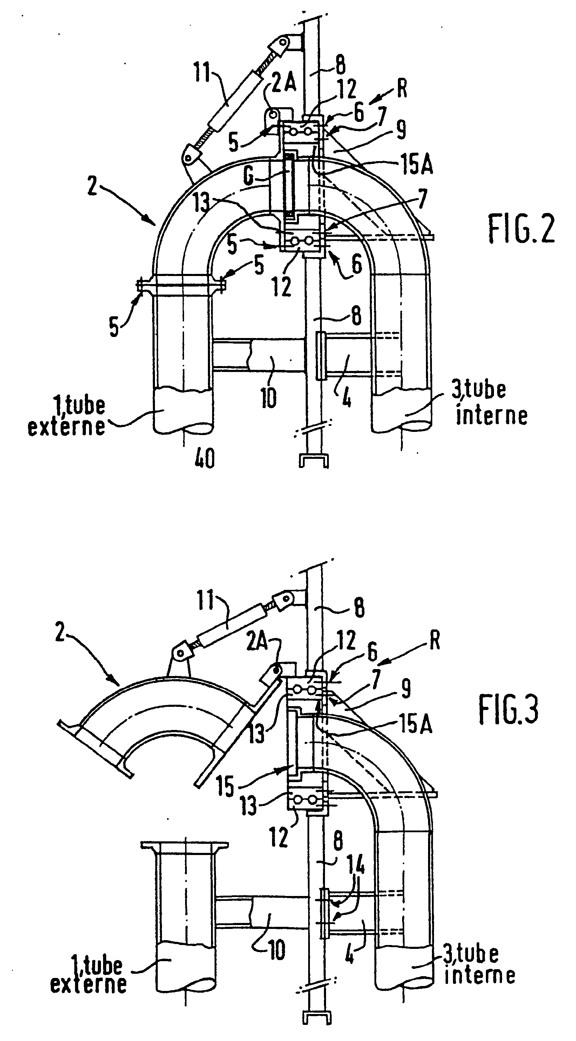

Dans l'environnement du style 40 et en position normale (Fig.2) le tube externe (1) est relié par un sous-ensemble bride-coude-bride (2) au tube interne (3) lequel sous-ensemble (2) est susceptible, soit de s'ouvrir par pivotement, soit de se démonter totalement.

Un support pour ce démontage et le démontage subséquent de la rotation est prévu entre la poulie (8) et le tube interne (3).

Une boulonnerie (5) permet la fixation de l'ensemble bride-coude-bride (2) sur l'embout femelle (12) de la rotation et sur le tube externe (1).

Une boulonnerie (6) permet la fixation de la poulie (8) sur l'embout femelle (12).

Une boulonnerie (7) réalise la fixation de la chaise (9) sur l'embout mâle (13) de la rotation.

La chaise (9) est normalement soudée au tube interne (3) et une liaison rigide (10) existe normalement entre le tube externe et la poulie (8).

Enfin un tendeur (11) est prévu, mais il n'est pas nécessaire en condition normale. Ce tendeur est articulé entre la poulie (8) et le sous-ensemble bride-coude-bride (2).

Pour obtenir le changement de garniture il suffit que la boulonnerie (5) soit démontée.

Le sous-ensemble bride-coude-bride (2) articulé en (2A) sur l'embout femelle (12) peut alors être relevé par le tendeur (11) ce qui permet l'accès facile au logement (15) de la garniture pour son remplacement.

Pour obtenir le démontage de la rotation il convient de mettre en place une boulonnerie (14) réunissant effectivement le support (4) à la poulie (8) lequel support était jusqu'alors libre par rapport à cette poulie. Cette mise en place permet de relier le tube externe (1) au tube interne (3) par l'intermédiaire des pièces (10, 8 et 4).

Les boulonneries (6 et 7) mont ensuite démontées ce qui permet à la rotation R (13-12) de pouvoir elle-même être démontée après dépose du sous-ensemble bride-coude-bride (2) en défaisant l'articulation (2A).

La rotation R (13-12) était jusqu'alors dans un logement (15A) périphérique, concentrique au logement (15) de la garniture et trouvé sur la poulie (8).

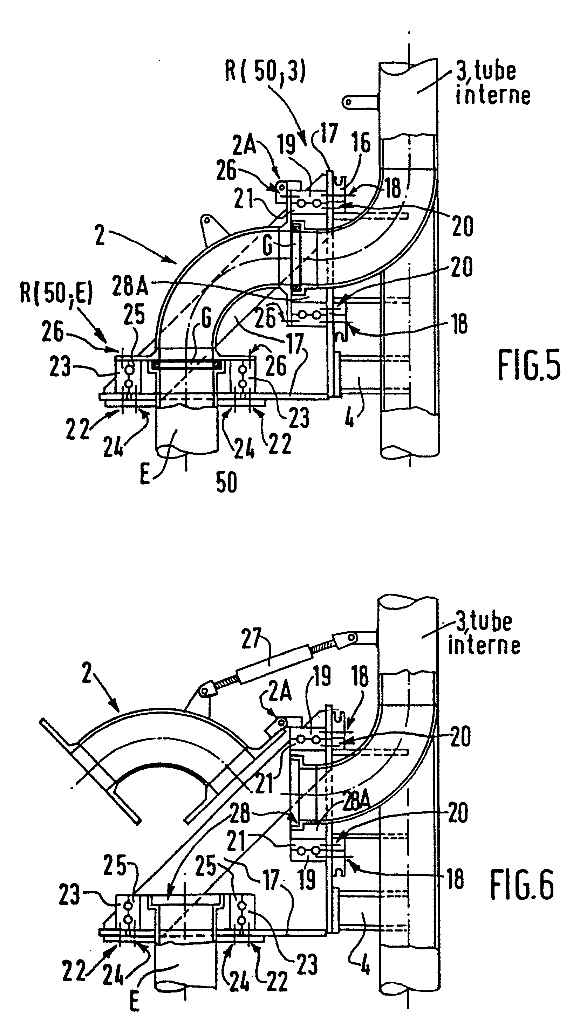

L'environnement de la rotation (50 ; 3) du style 50 (Fig. 5) comprend le tube interne (3), la poulie fixe (16) de la manoeuvre du tube interne et la chaise (17).

Une boulonnerie (18) fixe la poulie (16) - la chaise (17) et l'embout femelle (19) de la rotation (50 ;3).

Une boulonnerie (20) fixe le tube interne (3) sur l'embout mâle (21) de la rotation (50 ; 3).

L'environnement de la rotation (50 ; E) du style 50 (Fig. 5) comprend l'embase (E) et la chaise (17).

Une boulonnerie (22) fixe la chaise (17) et l'embout femelle (23) de la rotation (50 ; E).

Une boulonnerie (24) fixe l'embout mâle (25) de cette rotation et l'embase (E).

On retrouve dans cette disposition du style 50 comme dans la disposition du style 10 un ensemble bride-coude-bride (2) et un support (4) pour le démontage de cet ensemble (2) et le démontage subséquent des rotations (50 ; 3) et (50 ; E).

L'ensemble bride-coude-bride (2) relie, dans ce cas, en position normale (Fig. 5) le tube interne (3) et l'embase (E).

Une boulonnerie (26) fixe L'ensemble bride-coude-bride (2) sur les embouts femelles (19) et (23) des rotations (50 ; 3) et (50 ; E) respectivement.

Le support (4) lié au tube interne (3) est, dans ce cas, libre vis-à-via de la chaise (17) jusqu'au démontage des rotations (50 ; 3) et (50 ; E).

Enfin un tendeur (27) est également prévu mais il n'est pas monté en condition normale. Ce tendeur (27),quand il est monté, est articulé entre le tube interne (3) et l'ensemble bride-coude-bride (2).

Pour obtenir le changement de garniture il suffit que la boulonnerie (26) soit démontée et de mettre en place le tendeur (27). L'ensemble bride-coude-bride (2) est alors relevé par le tendeur (27) ce qui permet l'accès facile aux logements (28) des garnitures pour leur remplacement.

Pour obtenir le démontage des rotations (50 ; 3) et (50 ; E) il convient de mettre en place une boulonnerie (29) réunissant de manière effective le support (4) à la chaise (17). Cette mise en place permet de relier le tube interne (3) à la chaise (17). Il convient également de mettre en place une boulonnerie (30) reliant la chaise (17) à l'embase (E).

Les boulonneries (18, 20, 22 et 24) sont ensuite démontées ce qui permet aux rotations (50 ; 3)et (50; E) de pouvoir être démontées après dépose de l'ensemble bride-coude-bride (2) en défaisant l'articulation (2A).

Les rotations (50 ; 3) et (50 ; E) étaient jusqu'alors dans des logements (28A) périphériques, concentriques aux logements (28) des garnitures et trouvés sur la chaise (17) pour la rotation (50 ; 3) comme pour la rotation (50 ; E).

**Revendications**

1. Tubulure articulée pour le transfert d'un produit solide, liquide ou gazeux, notamment pour bras de chargement et de déchargement, comportant de premier et second éléments de tube (E, 1, 2, 3) communiquant au travers d'un joint tournant (40, 50) comportant une garniture d'étanchéité (G) et un roulement (R ; R (50, E) ; R (50, 3) ; 12, 13 ; 19, 21 ; 23, 25), caractérisée en ce que la garniture d'étanchéité est prévue à l'extrémité du premier élément de tube (3, E) en contact avec une bride d'un coude démontable par boulonnage au second élément de tube, et en ce que le roulement est dans sa totalité disposé axialement en regard de cette bride et disposé radialement à l'extérieur de cette garniture, concentrique à celle-ci et sans contact avec celle-ci, l'embout mâle (13, 21, 25) de ce roulement étant fixé par une première boulonnerie (7, 20, 24) à ce premier élément de tube, et l'embout femelle (12, 19, 23) étant fixé par une seconde boulonnerie (5, 26) à ladite bride et par une troisième boulonnerie (6, 18, 22) à une pièce de liaison (8, 16, 17) solidaire de ce second élément de tube indépendamment du coude démontable, cette garniture et ce roulement étant ainsi indépendants et démontables en vue de leur dépose, après démontage préalable du coude démontable.

2. Tubulure selon la revendication 1, caractérisée en ce que ce coude (2) liée au deuxième élément de tube est un sous-ensemble de liaison amovible, susceptiblesoit de s'ouvrir par pivotement, soit de se démonter totalement, s'appliquant à la fois contre la garniture d'étanchéité et contre l'embout femelle auquel il est lié.

3. Tubulure selon la revendication 2, caractérisé en ce que ce coude (2) est articulé (2A) sur l'embout femelle (12-19-23) du roulement, l'ouverture par pivotement du coude (2) permettant le démontage de la garniture (G), et le démontage total dudit coude (2) permettant le démontage du roulement (R ; R (50, E) ; R (50, 3) ; 12, 13 ; 19, 21 ; 23, 25).

4. Tubulure selon l'une quelconque des revendications 1 à 3, caractérisée en ce que ladite pièce de liaison (8) liée au second élément de tube est un disque solidaire de ce dernier.

5. Tubulure selon l'une quelconque des revendications 1 à 3, caractérisée en ce que le coude (2) étant lui-même liée à ce second élément de tube par un autre joint tournant similaire, l'embout femelle de cet autre joint tournant est, par une boulonnerie lié à ce coude (2) et par une autre boulonnerie lié à la même pièce.

6. Tubulure selon l'une quelconque des revendications 1 à 5, caractérisée en ce que le moyen d'étanchéité (G) comme le moyen de roulement (R) sont chacun reçu dans un logement séparé (15, 15A, 28, 28A), les deux logements (15, 15A), (28), (28A) étant concentriques.

7. Tubulure selon l'une quelconque des revendications 1 à 6, caractérisée en ce qu'un support (4) est prévu pour relier deux portions (1, 3) du tube-produit au moment du démontage du moyen de roulement (R).

## Ansprüche

1. Gelenkige Rohrleitung für den Transport eines festen, flüssigen oder gasförmigen Stoffes, insbesondere für Lade- und Entladearme, mit ersten und zweiten Rohrelementen (E, 1, 2, 3), die über eine Drehverbindung (40, 50) mit einer Dichtung (G) und einem Wälzlager (R ; R (50, E) ; R (50, 3) ; 12, 13 ; 19, 21 ; 23, 25) miteinander in Verbindung stehen, dadurch gekennzeichnet, daß die Dichtung am Ende des ersten Rohrelements (3, E) angeordnet ist und in Kontakt steht mit einem Flansch eines mittels einer Schraubenanordnung demontierbaren Krümmers an dem zweiten Rohrelement und daß das Wälzlager in seiner Gesamtheit zu diesem Flansch axial ausgerichtet und radial außerhalb der Dichtung konzentrisch zu dieser und ohne Kontakt mit ihr angeordnet ist, wobei das Innenteil (13, 21, 25) des Wälzlagers durch eine erste Schraubenanordnung (7, 20, 24) an dem ersten Rohrelement und das Außenteil (12, 19, 23) des Wälzlagers durch eine zweite Schraubenanordnung (5, 26) an dem Flansch und durch eine dritte Schraubenanordnung (6, 18, 22) an einem Verbindungsstück (8, 16, 17) befestigt ist, das unabhängig von dem demontierbaren Krümmer fest mit dem zweiten Rohrelement verbunden ist, so daß die Dichtung und das Wälzlager nach vorheriger Demontage des demontierbaren Krümmers im Hinblick auf ihren Ausbau voneinander unabhängig und demontierbar sind.

2. Rohrleitung nach Anspruch 1, dadurch gekennzeichnet, daß daß der mit dem zweiten Rohrelement verbundene Krümmer (2) eine entfernbare Verbindungs-Untereinheit ist, die sowohl durch Verschwenken geöffnet als auch vollständig demontiert werden kann und sowohl an der Dichtung als auch an dem Wälzlager-Außenteil anliegt, mit dem er verbunden ist.

3. Rohrleitung nach Anspruch 2, dadurch gekennzeichnet, daß der Krümmer (2A) an dem Wälzlager-Außenteil (12-19-23) gelenkig angebracht ist und daß das Öffnen des Krümmers (2) die Demontage der Dichtung (G) und die vollständige Demontage des Krümmers (2) die Demontage des Wälzlagers (R ; R (50, E) ; R (50, 3) ; 12, 13 ; 19, 21 ; 23, 25) ermöglichen.

4. Rohrleitung nach einem der Ansprüche 1 bis 3, dadurch gekennzeichnet, daß das mit dem zweiten Rohrelement verbundene Verbindungsstück (8) eine Scheibe ist, die fest mit dem Rohrelement verbunden ist.

5. Rohrleitung nach einem der Ansprüche 1 bis 3, dadurch gekennzeichnet, daß der Krümmer (2) selbst über eine weitere gleichartige Drehverbindung mit dem zweiten Rohrelement verbunden ist und daß das Außenteil dieser weiteren Drehverbindung über eine Schraubenanordnung mit dem Krümmer und über eine weitere Schraubenanordnung mit demselben Verbindungsstück verbunden ist.

6. Rohrleitung nach einem der Ansprüche 1 bis 5, dadurch gekennzeichnet, daß die Dichtung (G) sowie das Wälzlager (R) jeweils in einer separaten Aufnahme (15, 15A, 28, 28A) angeordnet sind und daß die beiden Aufnahmen (15, 15A, 28, 28A) konzentrisch angeordnet sind.

7. Rohrleitung nach einem der Ansprüche 1 bis 6, dadurch gekennzeichnet, daß ein Halter (4) vorgesehen ist, mit dem bei der Demontage des Wälzlagers (R) zwei Abschnitte der Stofftransport-Rohrleitung verbindbar sind.

## Claims

1. An articulated pipe system for the transfer of a solid, liquid or gaseous product, in particular for loading and unloading arms, comprising first and second pipe elements (E, 1, 2, 3) communicating through a rotatable joint (40, 50) comprising a sealing gasket (G) and a roller bearing (R ; R (50, E) ; R (50, 3) ; 12, 13 : 19, 21 ; 23, 25), characterized in that the sealing gasket is provided at the end of the first pipe element (3, E) in contact with a flange of a bend dismountably fixed by a bolted connection to the second pipe element, and in that the entire roller bearing is disposed axially facing this flange and disposed radially outside this gasket, concentric with the latter and not in contact with the latter, the male connector (13, 21, 25) of the roller bearing being fixed by a first nut and bolt type fixing device (7, 20, 24) to the first pipe element and the female connector (12, 19, 23) being fixed by a second nut and bolt type fixing device (5, 26) to the said flange and by a third nut and bolt type fixing device (6, 18, 22) to a connecting piece (8, 16, 17) fixed to the second element of the pipe independently of the dismountable bend, the gasket and the roller bearing thus being independent and dismountable with a view to their removal after prior dismounting of the dismountable bend.

2. A pipe system according to claim 1, characterized in that the bend (2) connected to the second pipe element is a removable sub-assembly which can either be opened by pivoting or can be totally dismounted, and which bears simultaneously against the sealing gasket and against the female connector to which it is connected.

3. A pipe system according to claim 2, characterized in that the bend (2) is articulated (2A) on the female connector (12-19-23) of the roller bearing, opening of the bend (2) by pivoting permitting the dismounting of the gasket (G), and the total dismounting of the said bend (2) permitting the dismounting of the roller bearing (R ; R (50, E) ; R (50, 3) ; 12, 13 : 19, 21; 23, 25).

4. A pipe system according to any one of claims 1 to 3, characterized in that the said connecting piece (8) connected to the second pipe element is a disc which is permanently fastened to the latter.

5. A pipe system according to any one of claims 1 to 3, characterized in that the bend (2) being itself connected to the second pipe element by means of another similar rotatable joint, the female connector of this other rotatable joint is connected by a nut and bolt type fixing device to the bend (2) and is connected by another nut and bolt type fixing device to the same connecting piece.

6. A pipe system according to any one of claims 1 to 5, characterized in that the sealing means (G), like the roller bearing means (R) are each fitted in a separate housing (15, 15A, 28, 28A), the two housings (15, 15A), (28), (28A) being concentric.

7. A pipe system according to any one of claims 1 to 6, characterized in that a support (4) is provided to hold together, at the time of dismounting the roller bearing (R), the two portions (1, 3) of the product pipe.

40

8

2

10

1
tube externe

3,tube
interne

2

50

E

FIG.1A

R

D

S

FIG.1B

11
2A
8
12
R
5
6 7
2
9
G
15A
13
7
5
5
5
12 6
5
8

**FIG.2**

10
4
1,tube externe
3,tube interne
40

11
2A
8
2
12
R
6
7
13
9
15A
15
13
12

**FIG.3**

8
14
10
4
1,tube externe
3,tube interne

FIG.4

FIG.5

FIG.6

FIG.7